# EUROPÄISCHE PATENTANMELDUNG

(11) **EP 4 191 353 A1**
(43) Veröffentlichungstag der Anmeldung: **07.06.2023**
(21) Anmeldenummer: 21212090.1
(22) Anmeldetag: 02.12.2021
(51) Int. Cl.: G05B 19/418, G05B 9/02, H04L 9/40

(54) **LEITSYSTEM FÜR EINE VERFAHRENSTECHNISCHE ANLAGE UND BETRIEBSVERFAHREN**

(71) Anmelder: Siemens Aktiengesellschaft, 80333 München (DE)
(72) Erfinder: Lutz, Benjamin, 76327 Pfinztal (DE); Palmin, Anna, 76187 Karlsruhe (DE)
(74) Vertreter: Siemens Patent Attorneys

(57) **Zusammenfassung**

Vorgeschlagen wird ein Leitsystem (18) für eine verfahrenstechnische Anlage (33), die automatisierte Komponenten umfasst, denen von dem Leitsystem (18) bestimmte Funktionsrechte (12) zugewiesen sind, um die Komponenten (5a, 5b) bedienen und beobachten zu können, wobei das Leitsystem (18) wenigstens einen Operator Station Server (19) umfasst, auf dem ein Computer-Werkzeug (28a, 28b) zum Bedienen und Beobachten der automatisierten Komponenten (5a, 5b) der verfahrenstechnischen Anlage (33) durch einen Operator implementiert ist. Das Leitsystem (18) ist dadurch gekennzeichnet, dass das Computer-Werkzeug (28a, 28b) dazu ausgebildet ist, auf eine Anforderung des Operators hin, für eine von dem Operator im Rahmen der Anforderung festgelegte Teilmenge (4) der Vielzahl von Komponenten (5a, 5b) der verfahrenstechnischen Anlage (33) zur Laufzeit der verfahrenstechnischen Anlage (33) eine Konfiguration (6) zu erzeugen, die von einem weiteren Leitsystem zur Automatisierung und zum Bedienen und Beobachten der Teilmenge (4) der Vielzahl von Komponenten (5a, 5b) integrierbar ist, wobei die Konfiguration (6) für jede von der Konfiguration (6) umfasste Komponente (5a, 5b) Funktionsrechte (10) umfasst, so dass der Teilmenge (4) der Vielzahl von Komponenten (5a, 5b) nach der Integration der Komponenten (5a, 5b) in das weitere Leitsystem automatisch dieselben Funktionsrechte (12) zur Bedienung und Beobachtung zuweisbar sind, die der jeweiligen Komponente (5a, 5b) von dem Leitsystem (18) zugewiesen sind.

## Beschreibung

Die Erfindung betrifft ein Leitsystem für eine verfahrenstechnische Anlage, die automatisierte Komponenten umfasst, denen von dem Leitsystem bestimmte Funktionsrechte zugewiesen sind, um die Komponenten bedienen und beobachten zu können, wobei das Leitsystem wenigstens einen Operator Station Server umfasst, auf dem ein Computer-Werkzeug zum Bedienen und Beobachten der automatisierten Komponenten der verfahrenstechnischen Anlage durch einen Operator implementiert ist. Außerdem betrifft die Erfindung eine Verwendung eines Leitsystems zum Betrieb einer verfahrenstechnischen Anlage und ein Betriebsverfahren für eine verfahrenstechnische Anlage.

Aufgrund des (durch die zunehmende Verwendung von offenen IT-Standards und -Protokolle) steigenden Schutzbedarfs und der Anforderungen der IEC 62443 als des führenden Industrial Security Standards müssen die Kommunikationsverbindungen in Leitsystemen technischer Anlagen zunehmend abgesichert, d.h. gegen unberechtigte Zugriffe angemessen geschützt werden.

Ein angemessener Schutz kann insbesondere - je nach Ergebnissen einer sog. Threat and Risk Analyse (TRA) - die Verschlüsselung und/ oder die Authentifizierung der übertragenen Daten umfassen. Entsprechende Verschlüsselungs- und Authentifizierungsmechanismen sind in der Regel ein Bestandteil sicherer Kommunikationsprotokolle (wie z.B. TLS, OPC UA). Der Einsatz sicherer Kommunikationsprotokollen setzt voraus, dass die Kommunikationsteilnehmer über digitale Zertifikate verfügen.

Die Zertifikate, die in einer operativen Umgebung (wie z.B. einer industriellen Anlage) eingesetzt werden, um beispielsweise sichere Kommunikation oder Benutzerauthentifizierung zu ermöglichen, bezeichnet man in der Regel als sogenannte "operative Zertifikate" (engl. Operational Certificates, OC). Aus Security-Gründen ist es empfehlenswert, ein dediziertes operatives Zertifikat pro verwendetes Kommunikationsprotokoll zu nutzen. Dies bedeutet, dass, falls eine Anlagenkomponente beispielsweise OPC UA zur Absicherung einer Kommunikationsbeziehung und TLS zur Absicherung einer anderen Kommunikationsbeziehung nutzt, die Komponente jeweils ein OPC UA-Zertifikat und ein TLS-Zertifikat benötigt (für die TLS-Server oder die TLS-Client-Authentifizierung). Ist die Menge von Anlagenkomponenten und somit der benötigten operativen Zertifikate klein, können die Zertifikate manuell in die Anlagenkomponenten importiert werden.

Mit einer steigenden Anzahl von Anlagenkomponenten, die in sichere Kommunikationsbeziehungen involviert sind und diverse Zertifikate benötigen, ist es sinnvoll, das Ausstellen von operativen Zertifikaten - basierend auf den von den Anlagenkomponenten generierten Zertifikatsanträgen (engl. Certificate Requests, CR) - sowie die Zuweisung der ausgestellten Zertifikate den Komponenten zu automatisieren. Ein derartiges automatisiertes Zertifikatsmanagement setzt in der Regel eine sog. Public Key Infrastruktur (PKI) voraus, die in der jeweiligen operativen Umgebung (z.B. einer industriellen Anlage) vorhanden sein soll.

Damit die Anlagenkomponenten sich mit den Komponenten der verwendeten Public Key Infrastruktur optimal "verständigen" können, werden in diesen Komponenten immer häufiger Zertifikatsmanagement-Protokolle wie z.B. das "Certificate Management Protocol (CMP)" nach RFC 4210 bzw. nach dem "Lightweight CMP Profile" implementiert. Unter Verwendung derartiger Protokolle können diverse Szenarien (wie beispielsweise initiale Beantragung eines operativen Zertifikats zu einem bestimmten Zweck oder die Beantragung einer Erneuerung eines zu einem bestimmten Zweck bereits vorhandenen operativen Zertifikats) unterschieden werden. Außerdem eignen sich derartige Protokolle dazu, verschiedene Arten von Zertifikaten zu beantragen, denn in den meisten Fällen ist es empfehlenswert, vor der Beantragung von applikationsspezifischen operativen Zertifikaten die Anlagenkomponenten mit den anlagengebundenen Kundenzertifikaten (engl. Customer Device Certificate, kurz: CDC), die die Komponenten an die Kundenanlage binden (wie ein Mitarbeiterausweis die Mitarbeiter an ein Unternehmen binden) auszustatten und diese dann als Basis für die Beantragung eines operativen Zertifikats zu nutzen.

Eine Package Unit ist ein modularer Anlagenteil, der in einem zentralen Engineering als eine abgeschlossene Einheit integriert werden kann. Eine Package Unit kann sogar eine ganze Teilanlage mit einer kompletten verfahrenstechnischen Struktur darstellen, die mehrere technische Einrichtungen (z.B. Tanks) umfasst, die wiederum mehrere Messstellen (z.B. Ventile, Monitore, Regler, Motoren...) beinhalten.

Wird eine Package Unit in ein Softwarewerkzeug zum Erstellen einer Projektierung für eine verfahrenstechnische Anlage (in das sogenannte "Engineering) importiert, so müssen anschließend Funktionsrechte für verschiedene, darin enthaltene technische Einrichtungen und Messstellen definiert bzw. vergeben werden. Dabei fehlt - auch im Hinblick auf Security - jegliche Referenz. Somit gestaltet sich der Vorgang zur Definition bzw. Vergabe der Funktionsrechte hin der Regel als sehr aufwendig.

Sind die Funktionsrechte "auf die Schnelle" und im Hinblick auf Security nicht optimal (was insbesondere "nicht restriktiv genug" bedeutet) vergeben, stellt dies ein großes Risiko im Hinblick auf Security dar. So können für dieselbe Package Unit - wenn diese nach und nach in verschiedenen verfahrenstechnischen Projekten eingebunden wird - jedes Mal andere Funktionsrechte für deren Verwendung zu Grunde liegen.

Des Weiteren ist aktuell keine Ad-hoc Modularisierung der verfahrenstechnischen Anlagenteile auf Grundlage der technologischen Hierarchie zur Laufzeit möglich. Dies ist insbesondere dann erstrebenswert, wenn beispielsweise die eigentliche verfahrenstechnische Anlage zur Herstellung eines Wirkstoffes mit einer weiteren Anlage zur Abfüllung koordiniert werden muss.

In der EP 3 258 662 A1 ist ein Verfahren zur Registrierung eines intelligenten elektrischen Gerätes bei einer Zertifizierungsstelle offenbart.

Die US 5 745 574 A offenbart eine Sicherheitsinfrastruktur mit einer Vielzahl an Zertifizierungsstellen.

Der Erfindung liegt die Aufgabe zugrunde, ein Leitsystem für eine verfahrenstechnische Anlage anzugeben, welches die Modularisierungsmöglichkeiten der verfahrenstechnischen Anlage verbessert.

Diese Aufgabe wird gelöst durch Leitsystem für eine technische Anlage mit den Merkmalen des Anspruchs 1. Außerdem wird die Aufgabe gelöst durch eine Verwendung eines Leitsystems zum Betrieb einer verfahrenstechnischen Anlage gemäß Anspruch 9. Zudem wird die Aufgabe gelöst durch ein Betriebsverfahren für eine verfahrenstechnische Anlage gemäß Anspruch 11. Vorteilhafte Weiterbildungen ergeben sich aus den abhängigen Ansprüchen.

Ein erfindungsgemäßes Leitsystem ist dadurch gekennzeichnet, dass das das auf dem Operator Station Server implementierte Computer-Werkzeug dazu ausgebildet ist, auf eine Anforderung des Operators hin, für eine von dem Operator im Rahmen der Anforderung festgelegte Teilmenge der Vielzahl von Komponenten der verfahrenstechnischen Anlage zur Laufzeit der verfahrenstechnischen Anlage eine Konfiguration zu erzeugen, die von einem weiteren Leitsystem zur Automatisierung und zum Bedienen und Beobachten der Teilmenge der Vielzahl von Komponenten integrierbar ist, wobei die Konfiguration für jede von der Konfiguration umfasste Komponente Funktionsrechte umfasst, so dass der Teilmenge der Vielzahl von Komponenten nach der Integration der Komponenten in das weitere Leitsystem automatisch dieselben Funktionsrechte zur Bedienung und Beobachtung zuweisbar sind, die der jeweiligen Komponente von dem Leitsystem zugewiesen sind.

Bei der verfahrenstechnischen Anlage handelt es sich um eine Anlage aus der Prozessindustrie wie beispielsweise eine chemische, pharmazeutische, petrochemische oder eine Anlage aus der Nahrungs- und Genussmittelindustrie.

Unter einem Leitsystem wird im vorliegenden Kontext ein computergestütztes, technisches System verstanden, das Funktionalitäten zum Darstellen, Bedienen und Leiten der verfahrenstechnischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber kann das Leitsystem u.a. Mittel zur Visualisierung der verfahrenstechnischen Anlage und zu einem Engineering aufweisen. Unter dem Begriff Leitsystem sind zusätzlich auch weitere Recheneinheiten für komplexere Regelungen und Systeme zur Datenspeicherung und -verarbeitung zu fassen.

Komponenten der verfahrenstechnischen Anlage können in an sich bekannter Weise Vorrichtungen wie Pumpen, Ventile, Motoren, Heizkessel und dergleichen sein. Die Komponenten verfügen über eine Automatisierung, d.h. sie sind in der Lage, selbständig (automatisiert) physikalische Größen mithilfe technischer Mittel zu erfassen und zu beeinflussen. Mit anderen Worten sind die automatisierten Komponenten der verfahrenstechnischen Anlage in die Lage versetzt, selbsttätig zu arbeiten.

Den einzelnen Komponenten der verfahrenstechnischen Anlage sind von dem Leitsystem bestimmte Funktionsrechte zugewiesen. Diese Funktionsrechte betreffen eine Bedienung und Beobachtung der Komponenten. Beispielsweise können einem ersten Operator Beobachtungsrechte für einige Komponenten und Bedienrechte für andere Komponenten zugewiesen sein, während einem zweiten Operator für alle Komponenten Beobachtungs- und Bedienrechte zugewiesen sind.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Operator Station Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen.

Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Das erfindungsgemäße Leitsystem stellt in besonders vorteilhafter Art und Weise die Funktion bereit, eine Teilmenge der Komponenten der verfahrenstechnischen Anlage direkt beim Bedienen und Beobachten in einer in sich abgeschlossenen Konfiguration(-sdatei) bereitzustellen. Diese Konfiguration beinhaltet die Funktionsrechte, die den darin enthaltenen Komponenten von dem Leitsystem zugewiesen worden sind. Ein weiteres, von dem Leitsystem verschiedenes (zweites) Leitsystem kann die Konfiguration im Rahmen einer Projektierung bzw. eines Engineerings der Teilmenge von Komponenten integrieren. Es sind verschiedene Szenarien möglich: Zum einen kann das weitere Leitsystem zum Betrieb der Teilmenge der Komponenten innerhalb der(selben) verfahrenstechnischen Anlage verwendet werden, wobei die Teilmenge der Komponenten mit weiteren Komponenten der verfahrenstechnischen Anlage interagieren kann. Zum anderen kann die Teilmenge der Komponenten auch autark betrieben werden (innerhalb oder außerhalb der verfahrenstechnischen Anlage).

Das Leitsystem ermöglicht eine Fremdorchestrierung der Teilmenge der Komponenten, was ein Zusammenspiel der verfahrenstechnischen Anlage mit anderen Anlage vereinfacht. Es kann beispielsweise eine Teilmenge von Komponenten der verfahrenstechnischen Anlage, die zur Herstellung eines Wirkstoffes ausgebildet ist, mit einer weiteren Anlage kombiniert werden, die der Abfüllung von Erzeugnissen dient. Das Leitsystem erhöht in wesentlichem Maße die Flexibilität der verfahrenstechnischen Anlage, da eine Modularisierung (wobei die Teilmenge einem Modul entspricht) zu einer Laufzeit der verfahrenstechnischen Anlage durch den Operator Station Server erfolgen kann. Durch die der Konfiguration beigefügten Funktionsrechte für die einzelnen Komponenten der Teilmenge (des Moduls) kann zudem ein fundierter Beitrag zur Einhaltung des Minimalitätsprinzips bzw. der Least-Privilege Anforderung der IEC-Norm 62443 hinsichtlich minimaler Funktionsrechte geleistet werden.

Bevorzugt ist die Anforderung des Operators an einen Operator Station Client des Leitsystems gerichtet bzw. zu richten, wobei der Operator Station Client dazu ausgebildet ist, auf die Anforderung des Operators hin die Konfiguration von dem Operator Station Server abzufragen und an einer externen Schnittstelle zur Integration in das weitere Leitsystem bereitzustellen. Die externe Schnittstelle kann dabei sowohl in dem Operator Station Client als auch in dem Operator Station Server realisiert sein und beispielsweise auf dem Profinet oder dem OPC UA Standard beruhen.

Die Anforderung des Operators kann eine Auswahl der Teilmenge der Vielzahl von Komponenten aus einer durch den Operator Station Client des Leitsystems visuell dargebotenen technologischen Hierarchie der Komponenten der verfahrenstechnischen Anlage umfassen. Die technologische Hierarchie stellt dabei ein hierarchisches Namensschema dar, welches eine Funktionsstruktur der einzelnen Komponenten der verfahrenstechnischen Anlage abbildet und durch den Operator Station Client dem Operator visuell dargeboten wird. Mit Hilfe der technologischen Hierarchie kann die (komplexe) verfahrenstechnische Anlage in Teilprobleme zerlegt werden, die mit vertretbarem Aufwand lösbar sind. Aus der technologischen Hierarchie kann der Operator effizient eine Teilmenge von Komponenten der verfahrenstechnischen Anlage identifizieren, die als Konfiguration (mit anderen Worten: als Modul oder als Package Unit) einem oder mehreren weiteren Leitsystemen zur Verfügung gestellt wird.

Die erzeugte Konfiguration kann eine Datenstruktur aufweisen, die an dem Aufbau eines Modular Type Packages gemäß dem VDI/VDE/NAMUR 2658 Standard orientiert ist. Das erfindungsgemäße Leitsystem fügt dabei der durch den VDI/VDE/NAMUR 2658 Standard vorgegebenen Struktur weitere Informationen wie die Funktionsrechte hinzu.

Die Konfiguration kann Informationen über Kommunikationsprotokolle umfassen, die von der, von der Konfiguration umfassten Teilmenge der Vielzahl von Komponenten verwendet werden.

Die Konfiguration kann eine strukturelle Beschreibung der von der Konfiguration umfassten Teilmenge der Vielzahl von Komponenten umfassen. Die Konfiguration kann beispielsweise eine Informationen darüber umfassen, dass die Teilmenge ein Ventil und einen dazugehörigen Durchflussmesser umfasst.

Im Rahmen einer vorteilhaften Weiterbildung der Erfindung umfasst die Konfiguration Zertifikate, die für eine Kommunikation der von der Konfiguration umfassten Teilmenge der Vielzahl von Komponenten mit dem weiteren Leitsystem vorgesehen und ausgebildet sind. Unter einem Zertifikat wird dabei ein digitaler Datensatz verstanden, der bestimmte Eigenschaften (in diesem Fall von Maschinen, Geräten, Applikationen und dergleichen) bestätigt. Eine Authentizität und Integrität des Zertifikats können in der Regel mittels kryptografischer Verfahren verifiziert werden.

Für eine gesicherte Orchestrierung ausschließlich der dedizierten, ad hoc modularisierten Teilmenge der Vielzahl von Komponenten der verfahrenstechnischen Anlage mit dem vorgesehen, dedizierten weiteren Leitsystem als weiterer Orchestrierungs-Instanz werden dabei operative Zertifikate ausgestellt und in der Konfiguration hinterlegt, die von der Teilmenge der Komponenten ausschließlich für die Kommunikation mit der vorgesehen, dedizierten weiteren Orchestrierungs-Instanz (dem weiteren Leitsystem) verwendet werden dürfen. Die Zertifikate können dabei in einem sicheren, hardwarebasierten Sicherheitsspeicher der Teilmenge der Vielzahl von Komponenten hinterlegt sein.

Die Aufgabe wird zudem gelöst durch die Verwendung eines Leitsystems wie zuvor beschrieben zum Betrieb einer verfahrenstechnischen Anlage.

Bei dieser Verwendung kann die erzeugte Konfiguration in das weitere Leitsystem integriert werden, um eine Automatisierung sowie eine Bedienung und Beobachtung der Teilmenge der Vielzahl von Komponenten durch das weitere Leitsystem auf Basis der erzeugten Konfiguration zu ermöglichen.

Die Aufgabe wird außerdem gelöst durch ein Betriebsverfahren für eine verfahrenstechnische Anlage, die automatisierte Komponenten umfasst, denen von dem Leitsystem bestimmte Funktionsrechte zugewiesen sind, um die Komponenten bedienen und beobachten zu können, wobei das Leitsystem wenigstens einen Operator Station Server umfasst, auf dem ein Computer-Werkzeug zum Bedienen und Beobachten der automatisierten Komponenten der verfahrenstechnischen Anlage durch einen Operator implementiert ist, bei dem ein Operator eine Anfrage an das Computer-Werkzeug stellt und das Computer-Werkzeug auf die Anforderung des Operators hin für eine von dem Operator im Rahmen der Anforderung festgelegte Teilmenge der Vielzahl von Komponenten der verfahrenstechnischen Anlage zur Laufzeit der verfahrenstechnischen Anlage eine Konfiguration erzeugt, die von einem weiteren Leitsystem zur Automatisierung und zum Bedienen und Beobachten der Teilmenge der Vielzahl von Komponenten integrierbar ist, wobei die Konfiguration für jede von der Konfiguration umfasste Komponente Funktionsrechte umfasst, so dass der Teilmenge der Vielzahl von Komponenten nach der Integration der Komponenten in das weitere Leitsystem automatisch dieselben Funktionsrechte zur Bedienung und Beobachtung zuweisbar sind, die der jeweiligen Komponente von dem Leitsystem zugewiesen sind.

Dabei kann das Computer-Werkzeug dem Operator durch einen mit dem Operator Station Server verbundenen Operator Station Client visuell dargeboten werden, und der Operator die Anfrage durch den Operator Station Client an den Operator Station Server stellen, wobei der Operator Station Client von dem Computer-Werkzeug des Operator Station Servers die erzeugte Konfiguration empfängt und an einer externen Schnittstelle zur Integration in das weitere Leitsystem bereitstellt.

Die erzeugte Konfiguration kann dann in das weitere Leitsystem integriert und für die Teilmenge der Vielzahl von Komponenten auf Basis der Konfiguration eine Automatisierung, Bedienung und Beobachtung durch das weitere Leitsystem erzeugt werden.

Im Rahmen einer vorteilhaften Weiterbildung des Betriebsverfahrens prüft das weitere Leitsystem, ob der Teilmenge der Vielzahl von Komponenten gültige Zertifikate zugewiesen sind, die ein Zusammenwirken der Teilmenge der Vielzahl von Komponenten mit dem weiteren Leitsystem dienen. Nur im Erfolgsfall wird den Komponenten ein Zusammenwirken mit dem weiteren Leitsystem ermöglicht. Falls die Prüfung nicht erfolgreich sein sollte, kann eine Fehlermeldung an Operatoren des weiteren Leitsystems ausgegeben werden.

Bevorzugt prüft das weitere Leitsystem im Zuge der Integration der Konfiguration, ob Operatoren des weiteren Leitsystems Funktionsrechte zum Bedienen und Beobachten der Teilmenge der Vielzahl von Komponenten zustehen, wobei das Leitsystem im Erfolgsfall eine Bedienung und Beobachtung der Teilmenge der Vielzahl von Komponenten durch einen oder mehrere Operatoren des weiteren Leitsystems ermöglicht.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
- FIG 1: einen Operator Station Client eines Leitsystems in einer schematischen Darstellung;
- FIG 2: ein Objektmodell für eine Teilmenge von Komponenten einer verfahrenstechnischen Anlage;
- FIG 3: ein Leitsystem für eine verfahrenstechnische Anlage in einer schematischen Darstellung; und
- FIG 4: ein Zusammenwirken einer verfahrenstechnischen Anlage mit einer Fertigungsanlage in einer schematischen Darstellung.

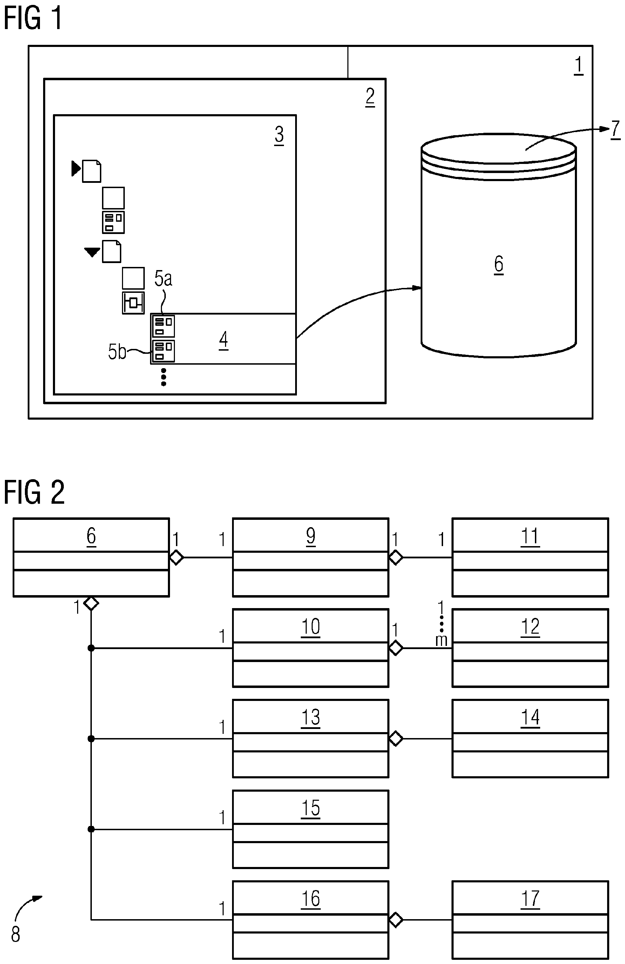

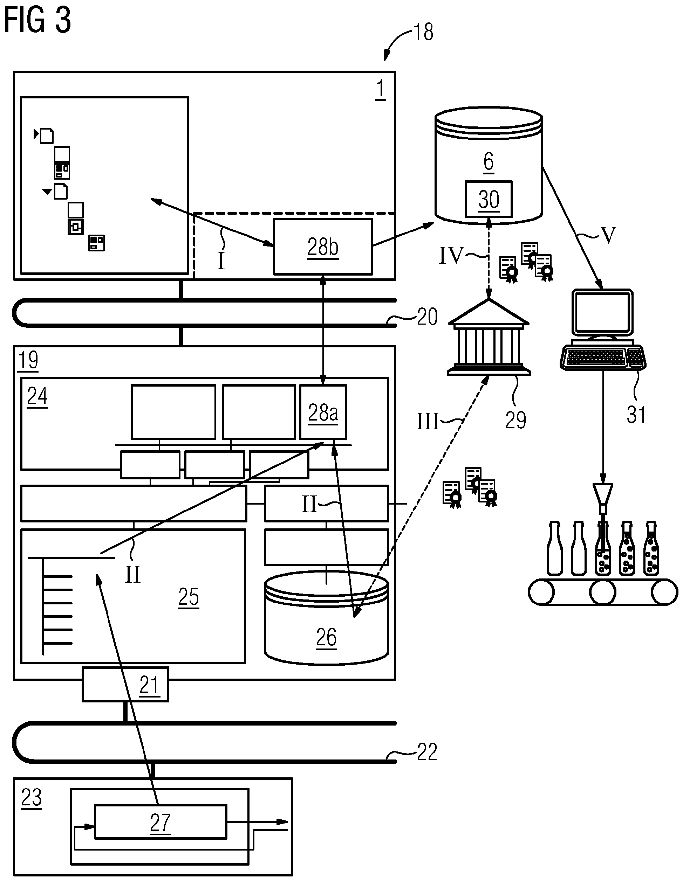

In FIG 1 ist ein Operator Station Client 1 eines Leitsystems (vgl. FIG 3) für eine verfahrenstechnische Anlage schematisch dargestellt. In einer Anzeige 2, die einem Operator des Leitsystems visuell dargeboten wird, ist eine hierarchisch, nach Funktionalitäten gegliederte Darstellung einer Vielzahl von Komponenten der verfahrenstechnischen Anlage dargestellt. Man spricht in diesem Zusammenhang auch von einer technologischen Hierarchie 3. Der Operator kann eine Teilmenge 4 der Vielzahl von Komponenten 5a, 5b der verfahrenstechnischen Anlage zu einer Laufzeit der verfahrenstechnischen Anlage, d.h. während eines Betriebs der verfahrenstechnischen Anlage auswählen und sich hieraus eine Konfiguration 6 erzeugen lassen. Die Konfiguration 6 ist von einem weiteren Leitsystem zur Automatisierung und zum Bedienen und Beobachten der Teilmenge 4 der Vielzahl von Komponenten 5a, 5b integrierbar, wobei die Konfiguration 6 für jede von der Konfiguration 6 umfasste Komponente 5a, 5b Funktionsrechte umfasst, so dass der Teilmenge 4 der Vielzahl von Komponenten 5a, 5b nach der Integration der Komponenten 5a, 5b in das weitere Leitsystem automatisch dieselben Funktionsrechte zur Bedienung und Beobachtung zuweisbar sind, die der jeweiligen Komponente 5a, 5b von dem Leitsystem zugewiesen sind. Die Konfiguration 6 wird an einer externen Schnittstelle 7 des Operator Station Clients 1 zur Integration in ein weiteres Leitsystem bereitgestellt, worauf anhand der Beschreibung von FIG 3 noch näher eingegangen wird.

In FIG 2 ist ein Objektmodell 8 der Konfiguration 6 dargestellt, welche von dem Operator Station Client 1 auf die Anforderung des Operators hin bereitgestellt wird. Die Konfiguration 6 weist eine Datenstruktur auf, die an dem Aufbau eines Modular Type Packages gemäß dem VDI/VDE/NAMUR 2658 Standard orientiert ist. Hierzu beinhaltet die Konfiguration 6 Informationen über von den Komponenten 5a, 5b benutzte Schnittstellen 9 und eine strukturelle Komponentenbeschreibung 10. Die Schnittstellen 9 dienen dabei der Automatisierung, Bedienung und Beobachtung der Komponenten 5a, 5b. Die strukturelle Beschreibung ist vergleichbar mit der technologischen Hierarchie 3, die auf dem Operator Station Client 1 visuell dargeboten wird.

Über den VDI/VDE/NAMUR 2658 Standard hinausgehend weist die Konfiguration Informationen über Kommunikationsprotokolle 11 auf, die von der, von der Konfiguration 6 umfassten Teilmenge 4 der Vielzahl von Komponenten 5a, 5b verwendet werden. Zudem sind den einzelnen Komponenten 5a, 5b in der Komponentenbeschreibung 10 Funktionsrechte 12 zugeordnet, die identisch sind mit den Funktionsrechten, die den Komponenten 5a, 5b von dem Leitsystem zugewiesen worden sind. Dies garantiert, dass bei der Orchestrierung der ad hoc modularisierten Teilmenge 4 der Komponenten 5a, 5c durch ein weiteres Leitsystem derselbe Zugriffschutz gilt, wie bei der Automatisierung, Bedienung und Beobachtung durch das (ursprüngliche) Leitsystem selbst.

In der Konfiguration 6 sind zudem Zertifikate 13 hinterlegt. Für die gesicherte Orchestrierung ausschließlich der ad hoc (d.h. zur Laufzeit der verfahrenstechnischen Anlage) modularisierten Teilmenge 4 der Komponenten 5a, 5c, die nur durch die jeweils vorgesehene, dedizierte Orchestrierungs-Instanz Erfolgen soll, sind operative Zertifikate 13 ausgestellt, die von der Teilmenge 4 der Komponenten 5a, 5c ausschließlich für die Kommunikation mit der vorgesehen, dedizierten Orchestrierungs-Instanz (d.h. dem weiteren Leitsystem) verwendet werden dürfen. Dabei werden im Detail die folgenden Daten von dem Leitsystem generiert:
a) Ein operatives Zertifikat 13 für die Teilmenge 4 der Komponenten 5a, 5c zum (von der Teilmenge 4 der Komponenten 5a, 5c selbst oder stellvertretend von dem Leitsystem) generierten Schlüsselpaar, welches bei einer zuständigen Certification Authority (CA) beantragt und samt der zugehörigen Certificate Chain 14 im Trust Store/ in der Trust List der Teilmenge 4 der Komponenten 5a, 5c unter "Own" hinterlegt wird, wobei der zugehörige private Schlüssel 15 möglichst sicher in einem (vorzugsweise Hardware-basierten) Secure-Element (Sicherheitsspeicher) abgelegt wird. Ferner wird das o.g. Zertifikat 13 samt dessen zugehörigen Trust Chain 14 im Trust Store/ in der Trust List der vorgesehenen dedizierten Orchestrierungs-Instanz (d.h. dem weiteren Leitsystem) als des einzigen erlaubten Kommunikationspartners) der Teilmenge 4 der Komponenten 5a, 5c unter "Trusted" hinterlegt (wo keine weiteren Zertifikate 13 abgelegt sind).
b) Das zugehörige Zertifikat 16 des weiteren Leitsystems als Orchestrierungs-Instanz (als des einzigen erlaubten Kommunikationspartners), welches samt dessen zugehörigen Certificate Chain 17 im Trust Store/ in der Trust List der Teilmenge 4 der Komponenten 5a, 5c unter "Trusted" hinterlegt wird (wo keine weiteren Zertifikate 16 abgelegt sind).

Hierbei ist zu beachten, dass die sog. Certificate Chain 14, 17 in der Regel ein Zertifikat der sog. Issuing CA, die das Zertifikat 13 der Teilmenge 4 der Komponenten 5a, 5c bzw. das Zertifikat 16 des weiteren Leitsystems als Orchestrierungs-Instanz ausgestellt hat, und Zertifikate der übergeordneten Intermediate CAs bis zum Zertifikat der Root CA , die als Trust Anchor agiert, beinhaltet.

Diese Art der Konfiguration 6 ermöglicht es, dass das Zertifikat 13 der Teilmenge 4 der Komponenten 5a, 5c und das Zertifikat 16 des weiteren Leitsystems als Orchestrierungs-Instanz unterschiedliche Issuing CAs und ggf. auch unterschiedliche Root CAs haben. Die Vertrauensbeziehung wird dadurch sichergestellt, dass der Trust Store bzw. die Trust List der Teilmenge 4 der Komponenten 5a, 5c wie unter a) und b) beschrieben befüllt ist und somit ausschließlich ein weiteres Leitsystem (oder dedizierte weitere Leitsysteme) als eine dedizierte Orchestrierungs-Instanz (bzw. als mehrere Orchestrierungs-Instanzen) als vertrauenswürdig akzeptiert.

In FIG 3 ist ein dazugehöriges Leitsystem 18 der verfahrenstechnischen Anlage dargestellt. Das Leitsystem 18 der verfahrenstechnischen Anlage umfasst neben dem anhand der Beschreibung von FIG 1 erläuterten Operator Station Client 1 auch einen Operator Station Server 19.

Der Operator Station Server 19 und der Operator Station Client 1 sind über einen Terminalbus 20 miteinander und optional mit nicht dargestellten weiteren Komponenten des Leitsystems 18 wie einem Engineering Station Server verbunden.

Ein Benutzer bzw. Operator kann zum Zwecke des Bedienens und Beobachtens über den Operator Station Client 1 mittels des Terminalbus 20 auf den Operator Station Server 19 zugreifen. Der Terminalbus 20 kann, ohne sich darauf zu beschränken, beispielsweise als Industrial Ethernet ausgebildet sein.

Der Operator Station Server 19 weist eine Geräteschnittstelle 21 auf, die mit einem Anlagenbus 22 verbunden ist. Über diese Geräteschnittstelle 21 kann der Operator Station Server 19 mit einem Automatisierungsgerät 23 sowie mit optional vorhandenen weiteren Komponenten der verfahrenstechnischen Anlage wie Peripheriegeräten (nicht dargestellt) kommunizieren. Der Anlagenbus 22 kann, ohne sich darauf zu beschränken, beispielsweise als Industrial Ethernet ausgebildet sein. Das Automatisierungsgerät 23 kann mit einer beliebigen Anzahl an Subsystemen (nicht dargestellt) verbunden sein.

Auf dem Operator Station Server 19 sind (unter anderem) ein Visualisierungsdienst 24, ein Prozessabbild 25 und ein Speicher 26 implementiert. Der Operator Station Client 1 ist dazu ausgebildet, Anlagenbilder zum Bedienen und Beobachten der verfahrenstechnischen Anlage darzustellen, worauf hier aber nicht weiter eingegangen wird.

Das Automatisierungsgerät 23 ist dazu ausgebildet, eine Automatisierung der Komponenten der verfahrenstechnischen Anlage zu steuern und zu überwachen. Hierzu ist auf dem Automatisierungsgerät 23 ein Steuerprogramm 27 implementiert, welches im Rahmen einer Projektierung der Automatisierung der verfahrenstechnischen Anlage auf das Automatisierungsgerät 23 geladen worden ist. Das Automatisierungsgerät 23 empfängt Prozessdaten (z.B. Messwerte) aus der verfahrenstechnischen Anlage und überträgt diese an das Prozessabbild 25 des Operator Station Servers 19.

Der Operator kann durch eine entsprechende Selektion der Teilmenge 4 der Komponenten 5a, 5b der verfahrenstechnischen Anlage in der technologischen Hierarchie 3 zur Laufzeit der verfahrenstechnischen Anlage eine Modularisierung, d.h. die Erzeugung der Konfiguration 6 anstoßen (Schritt I). Die für die Erzeugung der Konfiguration 6 notwendigen Inhalte liest ein hierfür spezialisiertes Computer-Werkzeug 28a, 28b, welches zu einem Teil auf dem Operator Station Client 1 und zu einem anderen Teil auf dem Operator Station Server 19 implementiert ist, aus dem Prozessabbild 25 und dem Konfigurationsspeicher 26 (Schritt II).

Zusätzlich werden die ad hoc operativen Zertifikate 13 für die Teilmenge 4 der Komponenten 5a, 5b zum (von der Teilmenge 4 der Komponenten 5a, 5b selbst oder stellvertretend vom Operator Station Server 19) generierten Schlüsselpaar bei einer zuständigen Certification Authority (CA) 29 beantragt (Schritt III). Nach der Ausstellung der Zertifikate 13 werden diese, wie zuvor anhand der Beschreibung von FIG 2 erläutert, in einem Trust Store / einer Trust List 30 der Teilmenge 4 der Komponenten 5a, 5b hinterlegt (Schritt IV).

Die erzeugte Konfiguration 6 der Teilmenge 4 der Komponenten 5a, 5b wird über eine Schnittstelle des Operator Station Clients 1 (z.B. über OPC UA) durch ein Engineering-Werkzeug 31 eines weiteren Leitsystems für eine Fertigungsanlage 32 eingelesen, welches damit das weitere Leitsystem für die ad hoc modularisierte Teilmenge 4 der Komponenten 5a, 5b konfiguriert (Schritt V).

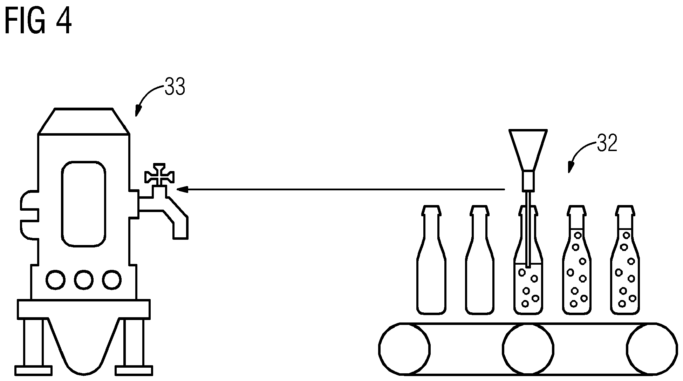

In FIG 4 ist die als Fermenter ausgebildete verfahrenstechnische Anlage 33 und die als Abfüllanlage ausgebildete Fertigungsanlage 32 dargestellt. Der Fermenter 33 ist durch das (erste) Leitsystem 18 automatisiert (und bedien- und beobachtbar). Die Teilmenge 4 der Vielzahl von Komponenten 5a, 5b des Fermenters 33 stellt ein Ventil mit dazugehörigen Komponenten dar. Dieses Ventil soll durch das weitere Leitsystem der Abfüllanlage 32 automatisiert (und bedient und beobachtet) werden. Hierfür wird eine Teilmenge 4 generiert, über welche die Abfüllanlage 32 exklusiven und eingeschränkten Zugriff auf das Ventil des Fermenters 33 hat, um eine Orchestrierung vorzunehmen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Leitsystem (18) für eine verfahrenstechnische Anlage (33), die automatisierte Komponenten umfasst, denen von dem Leitsystem (18) bestimmte Funktionsrechte (12) zugewiesen sind, um die Komponenten (5a, 5b) bedienen und beobachten zu können, wobei das Leitsystem (18) wenigstens einen Operator Station Server (19) umfasst, auf dem ein Computer-Werkzeug (28a, 28b) zum Bedienen und Beobachten der automatisierten Komponenten (5a, 5b) der verfahrenstechnischen Anlage (33) durch einen Operator implementiert ist,
**dadurch gekennzeichnet, dass**
das Computer-Werkzeug (28a, 28b) dazu ausgebildet ist, auf eine Anforderung des Operators hin, für eine von dem Operator im Rahmen der Anforderung festgelegte Teilmenge (4) der Vielzahl von Komponenten (5a, 5b) der verfahrenstechnischen Anlage (33) zur Laufzeit der verfahrenstechnischen Anlage (33) eine Konfiguration (6) zu erzeugen, die von einem weiteren Leitsystem zur Automatisierung und zum Bedienen und Beobachten der Teilmenge (4) der Vielzahl von Komponenten (5a, 5b) integrierbar ist, wobei die Konfiguration (6) für jede von der Konfiguration (6) umfasste Komponente (5a, 5b) Funktionsrechte (10) umfasst, so dass der Teilmenge (4) der Vielzahl von Komponenten (5a, 5b) nach der Integration der Komponenten (5a, 5b) in das weitere Leitsystem automatisch dieselben Funktionsrechte (12) zur Bedienung und Beobachtung zuweisbar sind, die der jeweiligen Komponente (5a, 5b) von dem Leitsystem (18) zugewiesen sind.

2. Leitsystem (18) nach Anspruch 1, bei dem die Anforderung des Operators an einen Operator Station Client (1) des Leitsystems (18) gerichtet ist, wobei der Operator Station Client (1) dazu ausgebildet ist, auf die Anforderung des Operators hin die Konfiguration (6) von dem Operator Station Server (19) abzufragen und an einer externen Schnittstelle zur Integration in das weitere Leitsystem bereitzustellen.

3. Leitsystem (18) nach Anspruch 1 oder 2, bei dem die Anforderung des Operators eine Auswahl der Teilmenge (4) der Vielzahl von Komponenten (5a, 5b) aus einer durch einen Operator Station Client (1) des Leitsystems (18) visuell dargebotenen technologischen Hierarchie (3) der Komponenten (5a, 5b) der verfahrenstechnischen Anlage (33) umfasst.

4. Leitsystem (18) nach einem der vorangegangenen Ansprüche, bei dem die erzeugte Konfiguration (6) eine Datenstruktur aufweist, die an dem Aufbau eines Modular Type Packages gemäß dem VDI/VDE/NAMUR 2658 Standard orientiert ist.

5. Leitsystem (18) nach einem der vorangegangenen Ansprüche, bei dem die Konfiguration (6) Informationen über Kommunikationsprotokolle (11) umfasst, die von der, von der Konfiguration (6) umfassten Teilmenge (4) der Vielzahl von Komponenten (5a, 5b) verwendet werden.

6. Leitsystem (18) nach einem der vorangegangenen Ansprüche, bei dem die Konfiguration (6) eine strukturelle Beschreibung (10) der von der Konfiguration (6) umfassten Teilmenge (4) der Vielzahl von Komponenten (5a, 5b) umfasst.

7. Leitsystem (18) nach einem der vorangegangenen Ansprüche, bei dem die Konfiguration (6) Zertifikate (13) umfasst, die für eine Kommunikation der von der Konfiguration (6) umfassten Teilmenge (4) der Vielzahl von Komponenten (5a, 5b) mit dem weiteren Leitsystem vorgesehen und ausgebildet sind.

8. Leitsystem (18) nach Anspruch 7, bei dem die Zertifikate (13) in einem sicheren, hardwarebasierten Sicherheitsspeicher (30) der Teilmenge (4) der Vielzahl von Komponenten (5a, 5b) hinterlegt sind.

9. Verwendung eines Leitsystems (18) gemäß einem der Ansprüche 1 bis 8 zum Betrieb einer verfahrenstechnischen Anlage (33).

10. Verwendung nach Anspruch 9, bei der die erzeugte Konfiguration (6) in das weitere Leitsystem integriert wird, um eine Automatisierung sowie eine Bedienung und Beobachtung der Teilmenge (4) der Vielzahl von Komponenten (5a, 5b) durch das weitere Leitsystem auf Basis der erzeugten Konfiguration (6) zu ermöglichen.

11. Betriebsverfahren für eine verfahrenstechnische Anlage (33), die automatisierte Komponenten (5a, 5b) umfasst, denen von dem Leitsystem (18) bestimmte Funktionsrechte (12) zugewiesen sind, um die Komponenten (5a, 5b) bedienen und beobachten zu können, wobei das Leitsystem (18) wenigstens einen Operator Station Server (19) umfasst, auf dem ein Computer-Werkzeug (28a, 28b) zum Bedienen und Beobachten der automatisierten Komponenten (5a, 5b) der verfahrenstechnischen Anlage (33) durch einen Operator implementiert ist, bei dem ein Operator eine Anfrage an das Computer-Werkzeug (28a, 28b) stellt und das Computer-Werkzeug (28a, 28b) auf die Anforderung des Operators hin für eine von dem Operator im Rahmen der Anforderung festgelegte Teilmenge (4) der Vielzahl von Komponenten (5a, 5b) der verfahrenstechnischen Anlage (33) zur Laufzeit der verfahrenstechnischen Anlage (33) eine Konfiguration (6) erzeugt, die von einem weiteren Leitsystem zur Automatisierung und zum Bedienen und Beobachten der Teilmenge (4) der Vielzahl von Komponenten (5a, 5b) integrierbar ist, wobei die Konfiguration (6) für jede von der Konfiguration (6) umfasste Komponente (5a, 5b) Funktionsrechte (12) umfasst, so dass der Teilmenge (4) der Vielzahl von Komponenten (5a, 5b) nach der Integration der Komponenten (5a, 5b) in das weitere Leitsystem automatisch dieselben Funktionsrechte (12) zur Bedienung und Beobachtung zuweisbar sind, die der jeweiligen Komponente (5a, 5b) von dem Leitsystem (18) zugewiesen sind.

12. Betriebsverfahren nach Anspruch 11, bei dem das Computer-Werkzeug (28a, 28b) dem Operator durch einen mit dem Operator Station Server (19) verbundenen Operator Station Client (1) visuell dargeboten wird, und bei dem der Operator die Anfrage durch den Operator Station Client (1) an den Operator Station Server (19) stellt, und bei dem der Operator Station Client (1) von dem Computer-Werkzeug (12) des Operator Station Servers (19) die erzeugte Konfiguration (6) empfängt und an einer externen Schnittstelle zur Integration in das weitere Leitsystem bereitstellt.

13. Betriebsverfahren nach Anspruch 11 oder 12, bei dem die erzeugte Konfiguration (6) in das weitere Leitsystem integriert wird, und bei dem für die Teilmenge (4) der Vielzahl von Komponenten (5a, 5b) auf Basis der Konfiguration (6) eine Automatisierung, Bedienung und Beobachtung durch das weitere Leitsystem erzeugt wird.

14. Betriebsverfahren nach Anspruch 13, bei dem das weitere Leitsystem prüft, ob der Teilmenge (4) der Vielzahl von Komponenten (5a, 5b) gültige Zertifikate (13) zugewiesen sind, die ein Zusammenwirken der Teilmenge (49 der Vielzahl von Komponenten (5a, 5b) mit dem weiteren Leitsystem dienen.

15. Betriebsverfahren nach Anspruch 13 oder 14, bei dem das weitere Leitsystem prüft, ob Operatoren des weiteren Leitsystems Funktionsrechte (12) zum Bedienen und Beobachten der Teilmenge (4) der Vielzahl von Komponenten (5a, 5b) zustehen, und bei dem das weitere Leitsystem im Erfolgsfall eine Bedienung und Beobachtung der Teilmenge (4) der Vielzahl von Komponenten (5a, 5b) durch einen oder mehrere Operatoren des weiteren Leitsystems ermöglicht.
